# EUROPÄISCHE PATENTSCHRIFT

(11) **EP 0 626 038 B1**
(45) Veröffentlichungstag und Bekanntmachung des Hinweises auf die Patenterteilung: **14.02.1996**
(21) Anmeldenummer: 94900723.1
(22) Anmeldetag: 25.11.1993
(51) Int. Cl.: F02D 41/38

(54) **SYSTEM ZUR STEUERUNG EINER KRAFTSTOFFZUMESSEINRICHTUNG**
CONTROL SYSTEM FOR A FUEL-METERING DEVICE
SYSTEME DE COMMANDE D'UN DISPOSITIF DE DOSAGE DE CARBURANT

(30) Priorität: 15.12.1992 DE 4242252
(43) Veröffentlichungstag der Anmeldung: 30.11.1994
(73) Patentinhaber: ROBERT BOSCH GMBH, D-70442 Stuttgart (DE)
(72) Erfinder: FISCHER, Werner, D-71296 Heimsheim (DE); SCHÖNFELDER, Dietbert, D-70839 Gerlingen (DE); REUTER, Uwe, D-71254 Ditzingen (DE); LUTZ, Peter, D-74189 Weinsberg (DE); SCHMITZ, Peter, D-71640 Ludwigsburg-Ossweil (DE)
(86) Internationale Anmeldenummer: DE9301121
(87) Internationale Veröffentlichungsnummer: WO9413947

(56) Entgegenhaltungen:
- DE-A- 3 928 875
- US-A- 3 796 197
- PATENT ABSTRACTS OF JAPAN vol. 009, no. 121 (M-382)25. Mai 1985 & JP,A,60 006 051 (NIPPON KOKUYU TETSUDO) 12. Januar 1985
- PATENT ABSTRACTS OF JAPAN vol. 009, no. 313 (M-437)10. Dezember 1985 & JP,A,60 147 550 (NIPPON DENSO KK;OTHERS: 01) 3. August 1985
- PATENT ABSTRACTS OF JAPAN vol. 010, no. 281 (M-520)25. September 1986 & JP,A,61 101 653 (NIPPON DENSO CO LTD) 20. Mai 1986
- 1985

## Beschreibung

### Stand der Technik

Die Erfindung betrifft ein System zur Steuerung einer Kraftstoffzumeßeinrichtung insbesondere für eine Dieselbrennkraftmaschine (vergleiche mit dem Abstract der JP-A-6014 7550).

Ein solches System zur Steuerung einer Kraftstoffzumeßeinrichtung ist aus dem SAE-Paper 850542 bekannt. Dort wird eine Steuereinrichtung für eine Kraftstoffpumpe beschrieben, mit der eine elektronische Steuereinheit über eine Leistungsendstufe ein der Kraftstoffpumpe zugeordnetes elektromagnetisch betätigtes Ventil steuert. Diese Steuereinheit bestimmt abhängig vom Betriebszustand der Brennkraftmaschine die gewünschten Zeitpunkte für den Förderbeginn und das Förderende der Kraftstoffzumessung. Ausgehend von diesen gewünschten Zeitpunkten berechnet die Steuereinheit die Ansteuerzeitpunkte für die Leistungsendstufe so, daß das elektromagnetische Ventil eine solche Stellung einnimmt, daß die Kraftstoffpumpe Kraftstoff fördert bzw. die Förderung beendet.

Mit einem solchen System kann lediglich der Förderbeginn und die Fördermenge eingestellt werden. Eine unabhängige Einstellung der Förderrate ist dagegen nicht möglich. Eine Verstellung des Förderbeginns bewirkt zwangsweise eine Verstellung der Förderrate, sofern nicht aufgrund der Nockenform nur eine konstante Förderrate möglich ist. Eine konstante Förderrate bei unterschiedlichen Förderbeginnen oder eine Einstellung einer beliebigen Förderrate unabhängig von dem Förderbeginn bei beliebiger Nockenform ist mit einer solchen Einrichtung nicht möglich. Als Förderrate wird üblicherweise die eingespritzte Kraftstoffmenge pro Zeit bzw. die eingespritzte Kraftstoffmenge pro Grad Nockenwellenwinkel bezeichnet

Nach dem Abstract der JP-A-6000 6051 werden Einspritzrate und Zeitpunkt aus Parametern berechnet.

Aus der DE-OS 35 40 313 ist eine Einrichtung bekannt, bei der der Förderbeginn mittels einer Nockenscheibe verstellbar ist. Das Förderende und damit die zuzumessende Kraftstoffmenge wird mittels eines Magnetventils festgelegt. Mit dieser Einrichtung ist eine voneinander unabhängige Einstellung der Förderrate und des Förderbeginns nicht möglich.

### Aufgabe der Erfindung

Der Erfindung liegt die Aufgabe zugrunde, bei einem System zur Steuerung einer Kraftstoffzumeßeinrichtung eine voneinander unabhängige genaue Einstellung der Förderrate und des Förderbeginns zu ermöglichen. Diese Aufgabe wird durch die in dem unabhängigen Anspruch gekennzeichneten Merkmale gelöst.

### Vorteile der Erfindung

Mit dem erfindungsgemäßen System kann der Förderbeginn und die Förderrate völlig unabhängig voneinander sehr präzise eingestellt werden. Vorteilhafte und zweckmäßige Ausgestaltungen und Weiterbildungen der Erfindung sind in den Unteransprüchen gekennzeichnet.

### Zeichnung

Die Erfindung wird nachstehend anhand der in der Zeichnung dargestellten Ausführungsformen erläutert. Es zeigen:

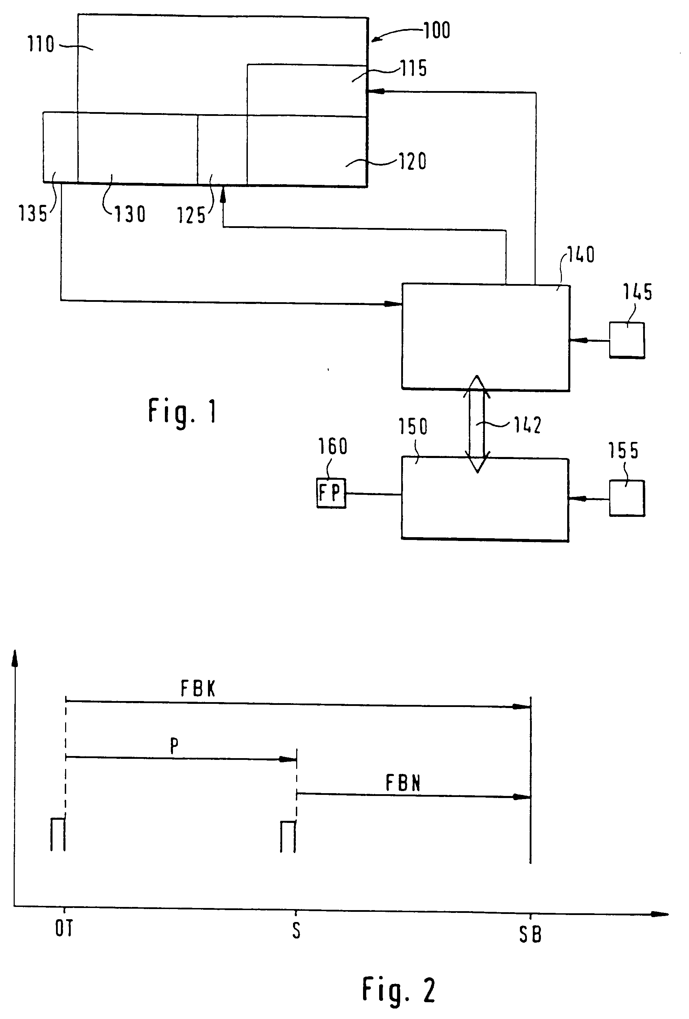

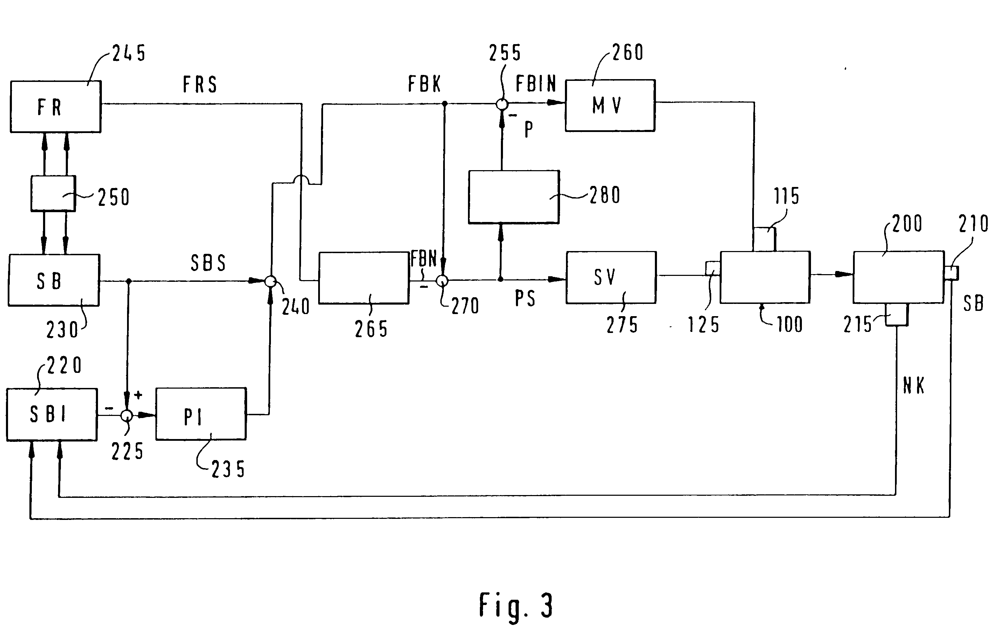

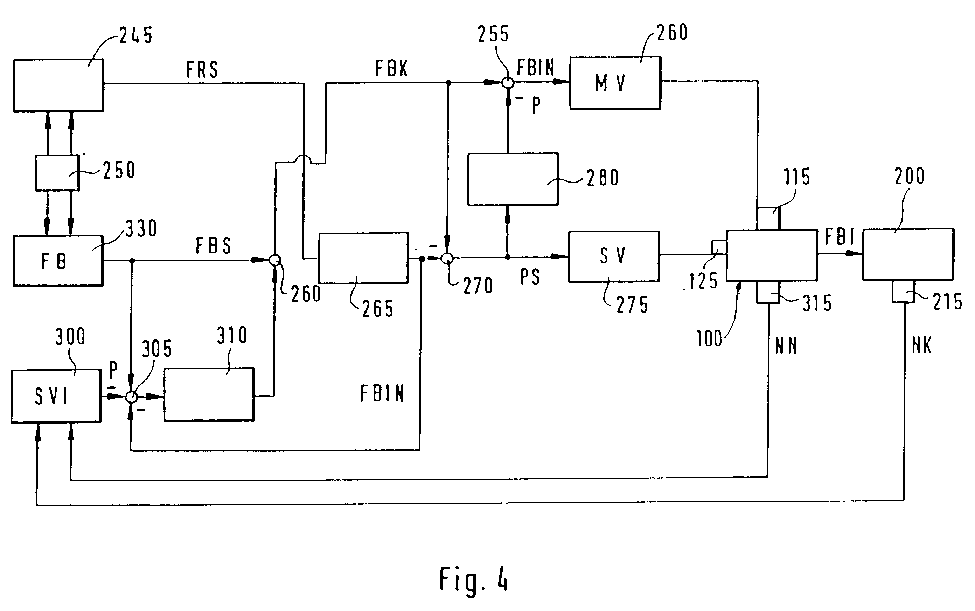

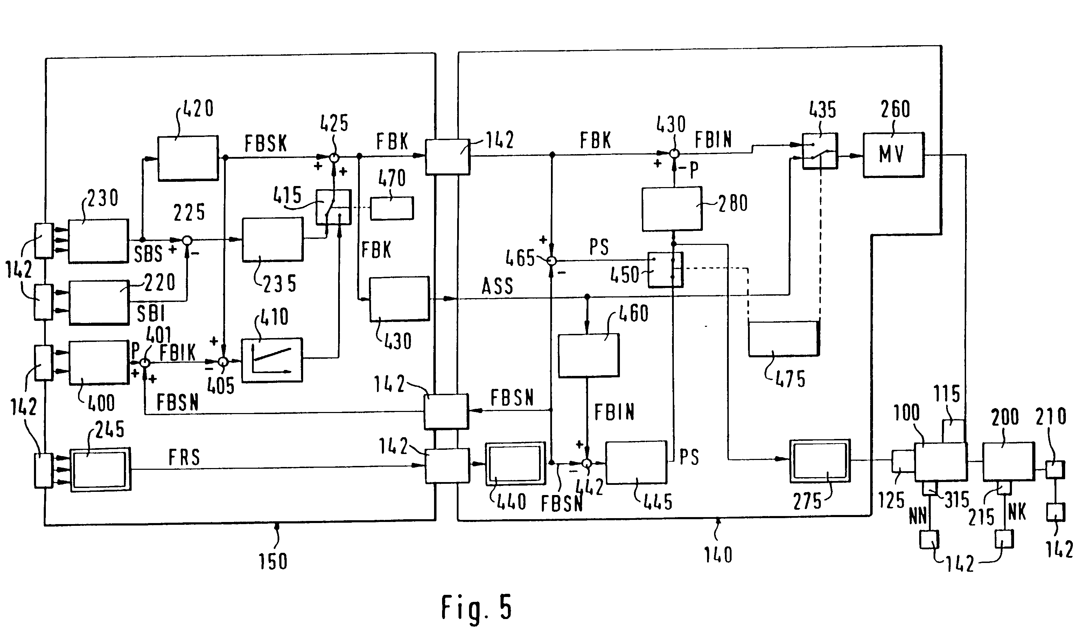

Figur 1 eine grob schematische Darstellung der erfindungsgemäßen Einrichtung, Figur 2 den Zusammenhang zwischen verschiedenen Signalen, Figur 3 ein Blockdiagramm der erfindungsgemäßen Einrichtung mit einer Spritzbeginnregelung, Figur 4 ein Blockdiagramm der erfindungsgemäßen Einrichtung mit einer Förderbeginnregelung sowie Figur 5 ein Blockdiagramm der erfindungsgemäßen Einrichtung in Verbindung mit einem BUS.

### Beschreibung der Ausführungsbeispiele

In Figur 1 ist grob schematisch die erfindungsgemäße Kraftstoffzumeßeinrichtung dargestellt. Die Kraftstoffpumpe 100 besteht aus verschiedenen Komponenten. In einem Niederdruckteil 110 befindet sich der Kraftstoff unter relativ niederem Druck, der durch eine nicht dargestellte Kraftstoff-Förderpumpe aufrechterhalten wird. Über ein Magnetventil 115 gelangt der Kraftstoff in einen Hochdruckteil 120. Der Hochdruckteil wird über einen Förderratenversteller 125 von einem Antrieb 130 angetrieben. Im Hochdruckteil 120 wird der Kraftstoff auf den für die Einspritzung erforderlichen Druck verdichtet. Mittels eines Sensors 135 wird die Drehzahl des Antriebs 130 erfaßt. Diese Drehzahl entspricht im wesentlichen der Nockenwellendrehzahl. Anstelle dieses Sensors kann auch ein Drehzahlsensor an der Nockenwelle oder an der Kurbelwelle eingesetzt werden.

Das Ausgangssignal dieses Drehzahlsensors 135 gelangt zu einer Pumpensteuereinheit 140. Diese Pumpensteuereinheit 140 beaufschlagt das Magnetventil 115 sowie den Förderratenversteller 125 mit Ansteuersignalen.

In einer besonders vorteilhaften Ausgestaltung besteht die Pumpensteuereinheit aus zwei getrennt angeordneten Komponenten. Die eigentliche Pumpensteuereinheit steht dann über entsprechende Verbindungsmittel 142 mit einer Motorsteuereinheit 150 sowie mit den verschiedenen Sensoren und evetuell weiteren Steuereinheiten in Verbindung. Als Verbindungsmittel 142 werden vorzugsweise BUS-Systeme eingesetzt.

Die Motorsteuerung verarbeitet in diesem Fall die motorspezifischen Parameter und gibt über die Verbindungsmittel 142 entsprechende Signale an die Pumpensteuerung 140 ab. Diese Motorsteuereinheit 150 beaufschlagt die Pumpensteuereinheit 140 über die Verbindungsmittel mit entsprechenden Signalen. So wird beispielsweise die Winkelstellung der Nockenwelle und/oder der Kurbelwelle bei der die Kraftstofförderung beginnen soll als digitale Größe übertragen. Weitere vorzugsweise digitale Signale geben die gewünschte Fördermenge sowie die gewünschte Förderrate an. Die Pumpensteuerung setzt diese vorzugsweise digitalen Signale in entsprechende Ansteuersignale, zur Beaufschlagung des Magnetventils 115 und des Förderratenverstellers 125, um.

Sensoren 145, die mit der Pumpensteuereinheit verbunden sind, erfassen pumpenspezifische Daten, wie zum Beispiel die Stellung der Antriebswelle 130. Mittels der Sensoren 155 werden die motorspezifischen Daten sowie weitere Betriebsparamter wie Temperatur und Druckwerte erfaßt und der Motorsteuereinheit 150 zugeleitet und von diesem verarbeitet. Ein Fahrpedalstellungsgeber 160 liefert ein Signal an die Motorsteuereinheit, das den Fahrerwunsch angibt.

Die mechanischen Komponenten der Kraftstoffpumpe 110 entsprechen im wesentlichen den Komponenten der in Figur 1 der DE-OS 35 40 313 beschriebenen Kraftstoffpumpe.

Die Arbeitsweise dieser Einrichtung in Verbindung mit der erfindungsgemäßen Pumpensteuereinheit ist aber eine andere. Durch Ansteuerung des Magnetventils 115 wird bei der erfindungsgemäßen Einrichtung sowohl der Förderbeginn als auch das Förderende festgelegt. Das Magnetventil 115 kann auch als erstes Stellmittel zur Festlegung des Förderbeginns und des Förderendes bezeichnet werden. Der Förderratenversteller 125, der beim Stand der Technik zur Einstellung des Förderbeginns dient, wird hier lediglich zur Einstellung der Förderrate eingesetzt. Der Förderratenversteller 125 wird auch als zweites Stellmittel bezeichnet.

Der Aufbau und die Arbeitsweise der Steuereinheit wird nachfolgend anhand der Ausführungsformen gemäß Figur 2 bis 5 beschrieben.

In Figur 2 sind verschiedene auftretende Signale über dem Winkel aufgetragen. Mit OT ist ein Signal, das den oberen Totpunkt der Kurbelwelle charakterisiert, mit S ein Synchronisationsimpuls auf der Antriebswelle der Pumpe und mit SB der Einspritzzeitpunkt bezeichnet. Ausgehend von dem oberen Totpunkt OT wird mittels des Signals FBK der Einspritzbeginn als Winkelgröße vorgegeben. Dieses Signal FBK gibt den Winkelabstand zwischen dem oberen Totpunkt und dem Einspritzbeginn SB an. Der Sollwert dieses Signals wird im folgenden mit FBSK und der Istwert mit FBIK bezeichnet.

Ausgehend von dem Synchronisationsimpuls S wird mittels des Signals FBN der Einspritzbeginn als Winkelgröße vorgegeben. Dieses Signal FBN gibt den Winkelabstand zwischen dem Synchronisationsimpuls S und dem Einspritzbeginn SB an. Der Sollwert dieses Signals wird im folgenden mit FBSN und der Istwert mit FBIN bezeichnet.

Die Phasenverschiebung zwischen dem Signal FBK und FBN wird mit P bezeichnet. Diese Größe P gibt an um wieviel Grad der Förderratenversteller 125 verstellt ist.

Wird der Einspritzbeginn ausgehend von dem oberen Totpunkt mittels des Signals FBK als Winkelgröße, die auf die Kurbelwelle bezogen ist, vorgegeben, so hat eine Verstellung des Förderratenverstellers keinen Einfluß auf den Einspritzbeginn. Wird der Einspritzbeginn jedoch ausgehend von dem Synchronisationsimpuls S mittels des Signals FBN als Winkelgröße, die auf die Antriebswelle bezogen ist, vorgegeben, so muß bei einer Verstellung des Förderratenverstellers die dabei entstehende Phasenverschiebung bei der Bestimmung des Einspritzbeginns berücksichtigt werden.

In Figur 3 sind die wesentlichen Elemente der Steuereinheit dargestellt. Diese Ausführungsform umfaßt eine Regelung des Einspritzbeginns.

Eine Brennkraftmaschine 200 bekommt von der Kraftstoffpumpe 100 eine bestimmte Kraftstoffmenge zugemessen. Der genaue Einspritzbeginn SB wird mittels eines Sensors 210 erfaßt. Hierzu werden vorzugsweise sogenannte Nadelbewegungsfühler eingesetzt, die die Bewegung der Nadel des Einspritzventils erfassen. Des weiteren ist an der Brennkraftmaschine 200 ein Sensor 215 angeordnet, der die Drehzahl NK und/oder die Stellung der Kurbelwelle ermittelt. Diese beiden Signale werden einer Einrichtung 220 zugeleitet, die ein Signal SBI berechnet, das den tatsächlichen Einspritzbeginn angibt. Dieses Signal SBI gelangt mit negativem Vorzeichen über einen Additionspunkt 225 zu einem Regler 235. Dieser Regler hat vorzugsweise PI-Verhalten. Am zweiten Eingang des Additionspunktes 225 liegt mit das Ausgangssignal des Spritzbeginnkennfeldes 230. In diesem Spritzbeginnkennfeld 230 ist abhängig von dem Ausgangssignal verschiedener Sensoren 250 der Sollwert SBS für den Spritzbeginn abgelegt. Dieses Signal gibt die Winkelstellung der Kurbelwelle an, bei dem der Einspritzbeginn erfolgen soll, um ein optimales Betriebsverhalten zu erzielen.

Das Ausgangssignal des Reglers 235 wird in dem Verknüpfungspunkt 240 mit dem Sollwert SBS verknüpft. Hierdurch wird eine Vorsteuerung erzielt. Der Verknüpfungspunkt 240 ist über den Additionspunkt 255 mit der Magnetventilansteuerung 260 verbunden. Die Magnetventilansteuerung 260 beaufschlagt dann das Magnetventil 115 mit einem Signal, das bei der optimalen Winkelstellung der Nockenwelle das Magnetventil öffnet bzw. schließt.

Des weiteren ist ein Förderratenkennfeld 245 vorgesehen, das einen Sollwert FRS für die Förderrate vorgibt. In der Förderbeginnberechnung 265 wird dieses Signal in ein Förderbeginn Signal FBN umgerechnet. Das Ausgangssignal FBN der Förderbeginnberechnung 265 gelangt über einen Additionspunkt 270 zu einer Förderratenverstelleransteuerung 275, die den Förderratenversteller 125 ansteuert. Am Ausgang des Additionspunktes 270 liegt ein Signal PS an, das einen Sollwert für die Phasenverschiebung zwischen Antriebswelle und Kurbelwelle darstellt. Dieses Signal PS gibt an um welchen Betrag der Förderratenversteller zu verdrehen ist.

Des weiteren wird das Ausgangssignal FBK des Verknüpfungspunktes 240 dem Additionspunkt 270 zugeleitet. Das Ausgangssignal des Additionspunkts 270 wird wiederum über ein Förderratenverstellermodell 280 dem Additionspunkt 255 zugeführt.

Diese Einrichtung arbeitet nun wie folgt:

In dem Förderratenkennfeld 245 ist die Förderrate FRS abhängig von verschiedenen Betriebskenngrößen abgelegt. Ausgehend von diesem Sollwert für die Förderrate FRS berechnet die Förderbeginnberechnung 265 die erforderlichen Förderbeginn FBN bezogen auf die Nockenwelle zur Einstellung der Förderrate. Wie in Figur 2 dargestellt, ergibt sich der erforderliche Sollwert für die Phasenverschiebung PS durch die Subtraktion von FBK und FBN im Additionspunkt 270. Dieser Sollwert für die Phasenverschiebung PS ist gleichbedeutend mit dem Sollwert für den Verstellwinkel PS des Förderratenverstellers 125.

Die Förderratenverstelleransteuerung 275 berechnet nun ausgehend von diesem Ssignal ein Ansteuersignal zur Beaufschlagung des Förderratenverstellers 125 und steuert diesen entsprechend an.

In dem Spritzbeginnkennfeld 230 ist der gewünschte Spritzbeginn SBS abhängig von verschiedenen Betriebskenngrößen abgelegt. Dieses Signal gibt die Winkelstellung der Kurbelwelle an, bei der die Einspritzung beginnen soll.

Der Block 220 berechnet ausgehend von dem Signal NK des Sensors 215 und des Sensors 210 ein Winkelsignal SBI, das angibt bei welcher Winkelstellung der Kurbelwelle die Einspritzung tatsächlich beginnt.

Der Regler 235 bestimmt abhängig von dem Vergleich zwischen dem Sollsignal SBS und dem tatsächlichen Einspritzbeginn SBI eine Größe zur Korrektur des in dem Förderbeginnkennfelds 230 abgelegten Sollwerts. Das Sollsignal SBS wird in dem Verknüpfungspunkt 240 mittels des Ausgangssignal des Reglers 235 korrigiert.

Mit dem von dem Regler 235 korrigiertem Ausgangssignal des Spritzbeginnkennfeldes 230 wird die Magnetventilansteuerung 260 beaufschlagt. Da die Magnetventilansteuerung 260 die Ansteuersignale ausgehend von der Winkelstellung der Antriebswelle vorgibt muß mittels der Phasenverschiebung P das Signal FBK in ein auf die Antriebswelle bezogenes Signal FBIN umgerechnet werden. Hierzu wird im Additionspunkt 255 von dem auf die Kurbelwelle bezogenen Signal FBK die Phasenverschiebung P zwischen Kurbelwelle und Antriebswelle subtrahiert.

Anschließend berechnet die Magnetventilansteuerung 260 ausgehend von diesem Signal FBIN das Ansteuersignal, um das Magnetventil 115 zum richtigen Zeitpunkt anzusteuern, damit die Kraftstoffzumessung zum richtigen Zeitpunkt beginnt.

Durch die Verstellung des Förderratenverstellers 125 verändert sich die Phasenverschiebung P zwischen der Kurbelwelle und der Antriebswelle. Hiermit verändert sich auch der Einspritzbeginn wenn er bezogen auf die Antriebswelle vorgegeben wird. Diese Verschiebung des Einspritzbeginns aufgrund der Verstellung des Förderratenverstellers muß bei der Ansteuerung des Magnetventils 115 berücksichtigt werden. Um dies zu ermöglichen, berechnet das Förderratenverstellermodell 280 ausgehend von dem Sollwert für den Verstellwinkel PS die entsprechende tatsächliche Lage des Förderratenverstellers und damit die Phasenverschiebung P. Bei diesem Förderratenverstellermodell 280 handelt es sich vorzugsweise um ein Verzögerungsglied, das die Verzögerung zwischen Ansteuerung und Reaktion des Förderratenverstellers 125 berücksichtigt. Dieses Signal berücksichtigt dann die Magnetventilansteuerung 260 bei der Berechnung des Signals zur Beaufschlagung des Magnetventils 115.

Da sich je nach Einspritzbeginn eine unterschiedliche Förderrate ergibt, ist es ferner erforderlich, daß das Signal FBK bei der Verstellung des Förderratenverstellers ebenfalls berücksichtigt wird. Hierzu wird in dem Additionspunkt 270 das Ausgangssignal der Förderbeginnberechnung 265 und das Ausgangssignal FBK des Additionspunktes 240 verknüpft. Dieses Signal gelangt dann zur Ansteuerschaltung 275 für den Förderratenversteller 125. Dieser Verstellwinkel gibt unter Berücksichtigung des Spritzbeginns den Winkel an, um den der Förderratenversteller 125 zu verstellen ist, um die gewünschte Förderrate zu erzielen.

Der Spritzbeginn wird über die Einschaltzeit des Magnetventils, und die Förderrate über die Verstellung des Förderratenverstellers eingestellt. Die Einstellung des Spritzbeginns ist unabhängig von der Dynamik des Förderratenverstellers und kann auch bei hohen Drehzahlen von Einspritzung zu Einspritzung verändert werden. Dies wird dadurch erreicht, daß der Spritzbeginn dynamisch unmittelbar auf die Magnetventilansteuerung und die Förderrate auf die Förderratenverstelleransteuerung wirkt. Der tatsächliche Verstellwinkel des Förderratenverstellers kann mit dem geeigneten Modell 280 nachgebildet werden und erlaubt eine entsprechede Berücksichtigung des Förderratenverstellers bei der Bildung des Ansteuersignals für das Magnetventil.

In Figur 4 ist eine Ausführungsform ohne Nadelbewegungsfühler 210 dargestellt. Entsprechende Elemente wie in Figur 3 sind mit entsprechenden Bezugsziffern bezeichnet. Im Unterschied zu Figur 3 ist anstelle des Spritzbeginnsensors 210 ein Sensor 315 vorgesehen, der die Stellung der Nockenwelle erfaßt. Das Ausgangssignal dieses Sensors 315 gelangt zu einer Einrichtung 300. Diese Einrichtung steht ferner mit dem Sensor 215 und dem Addittionmspunkt 305, der dem Additionspunkt 225 der Figur 3 entspricht, in Verbindung. Desweiteren wird das Ausgangssignal FBIN der Förderbeginnberechnung zum Additionspunkt 305 zurückgeführt. Die Spritzbeginnregler 235 wird ferner durch einen Förderbeginnregler 310 ersetzt.

Die Einrichtung 300 ermittelt ausgehend von der Synchronisationsimpuls S und dem Signal OT, das den oberen Totpunkt angibt, die Phasenverschiebung P und damit den Grad der Verstellung des Förderratenverstellers. Die Summe aus der Phasenverschiebung P und dem Ausgangssignal FBIN der Förderbeginnberechnung entspricht dem Istwert FBIK des Förderbeginns. Dieser wird im Additionspunkt 305 mit dem Sollwert FBS aus dem Förderbeginnkennfeld 330 verglichen. Der Förderbeginnregler 310 bestimmt ausgehend von diesem Vergleichsergebnis ein Ansteuersignal FBK zur Beaufschlagung der Magnetventilansteuerung 260.

Eine weitere vorteilhafte Ausführungsform der erfindungsgemäßen Einrichtung ist in Figur 5 dargestellt. Entsprechende Elemente, die bereits in den Figuren 1 bis 4 beschrieben wurden, sind mit den gleichen Bezugszeichen bezeichnet und werden nicht mehr näher erläutert.

In der Figur 5 ist der Aufbau der Motorsteuereinheit 150 und der Pumpensteuereinheit 140 detaillierter dargestellt. Die Motorsteuereinheit 150 umfaßt die Einrichtung 220, das Spritzbeginnkennfeld 230, das Förderratenkennfeld 245 sowie den Spritzbeginnregler 235.

Das Förderratenkennfeld 245 steht über die Verbindungsmittel 142 mit der Pumpensteuereinheit in Verbindung. Eine Istwertermittlung 400 steht über einen Additionspunkt 401 und einen Additionspunkt 405 mit einem Förderbeginnregler 410 in Verbindung. Der Förderbeginnregler 410 steht mit dem Schaltkontakt eines ersten Schalters 415 in Verbindung. Am Ruhekontakt des ersten Schalter 415 liegt das Ausgangssignal des Spritzbeginnreglers 235. An dessen Eingang das Ausgangssignal des Additionspunktes 225 liegt. Der Additionspunkt 225 verknüpft die Ausgangssignale des Spritzbeginnkennfeldes 230 und Istwertermittlung 220.

Das Ausgangssignal SBS des Spritzbeginnkennfeldes gelangt ferner zu einer Laufzeitermittlung 420. Das Ausgangssignal FBSK der Laufzeitermittlung 420 gelangt zum Additionspunkt 405. Das Ausgangssignal FBSK der Laufzeitermittlung 420 wird ferner im Additionspunkt 425 mit dem Ausganssignal des ersten Schalters 415 verknüpft. Dieses Signal FBK gelangt zum einen über die Verbindungsmittel 142 zur Pumpensteuereinheit 140 und zum anderen zu einer ASS-Erzeugung 430. Das Ausgangssignal ASS der ASS-Erzeugung 430 gelangt vorzugsweise über eine Signalleitung zur Pumpensteuereinheit 140.

Über die Verbindungsmittel 142 gelangt ein Signal FBSN von der Pumpensteuereinheit zu dem Additionspunkt 401.

Die Pumpensteuereinheit 140 ist wie folgt aufgebaut. Das Signal FBK gelangt über den Additionspunkt 430 zu einem zweiten Schalter 435. Ferner gelangt das Signal ASS zu dem zweiten Schalter 435. Je nach Stellung des zweiten Schalters 435 gelangt eines dieser beiden Signale zu der Magnetventilansteuerung 260.

Der Sollwert für die Förderrate FRS gelangt zu dem Kennfeld 440. Das Ausgangssignal FBSN des Kennfeldes 440 gelangt zu dem Additionspunkt 442 sowie zu dem Additionspunkt 465 jeweils mit negativem Vorzeichen. Der Additionspunkt 442 steht mit dem Eingang eines Förderratenreglers 445 in Verbindung. Dieser beaufschlagt wiederum einen dritten Schalter 450 mit einem Signal.

Der Additionspunkt 465 verknüpft die Signale FBSN und FBK. Das Ergebnis dieser Verknüpfung gelangt zu dem dritten Schalter 450. Der Schalter 450 wählt eines der beiden Signale aus und beaufschlagt die Ansteuerung 275 für den Förderratenversteller 125 und das Förderratenverstellermodel 280. Das Förderratenverstellermodell 280 beaufschlagt wiederum den Additionspunkt 430.

Das Signal ASS gelangt ferner über die ASS-Erfassung 460 zu dem Additionspunkt 442.

Der erste Schalter 415 wird von einer ersten Umschalteinrichtung 470 geschaltet. Der zweite und der dritte Schalter werden von einer zweiten Umschalteinrichtung 475 geschaltet. Die Umschalteinrichtungen können sowohl in die Steuereinheiten 150 und 140 integriert oder separat von diesen angeordnet sein. Im letzteren Fall ist nur eine Umschalteinrichtung erforderlich.

Die Umschalteinrichtungen erkennen unzulässige Betriebszustände. Solche unzulässigen Betriebszustände treten auf, wenn eine der beiden Steuereinheiten 150 oder 140 nicht mehr korrekt arbeitet, der Nadelbewegungsfühler 210 ausfällt oder wenn kein zuverlässiges ASS-Signal mehr vorliegt.

Das Pumpensteuereinheit und das Motorsteuereinheit arbeiten wie im Folgenden beschrieben.

Im Normalbetrieb befinden sich die Schalter in den eingezeichneten Positionen. In diesem Fall gibt die Motorsteuerung 150 ein Signal ASS an die Magnetventilansteuerung 260, das den Einspritzbeginn bezogen auf die Kurbelwelle auslöst. Hierzu gibt der Spritzbeginnregler entsprechend wie bei Figur 3 beschrieben ein Signal FBK vor, das den Winkel der Kurbelwelle angibt, bei dem der Einspritzbeginn ausgelöst wird. Dieses Winkelsignal wird in der ASS-Erzeugung 430 mittels einer Winkel-Zeit-Umrechnung (z. B.: einem Kurbelwellen-IWZ) in ein Impulssignal umgewandelt. Dieses Impulssignal wird von der Motorsteuereinheit 150 über eine seperate Leitung an die Pumpensteuereinheit 140 übergegeben und löst in der Magnetventilansteuerung 260 den Ansteuerimpuls für den Einspritzbeginn aus.

Der in dem Förderratenkennfeld 245 abgelegte Sollwert für die Förderrate wird als Digitalsignal über die Verbindungsmittel 142 von der Motorsteuereinheit an die Pumpensteuereinheit übertragen. In der Pumpensteuereinheit 140 wird dieses Signal im Kennfeld 440 in eine Winkelgröße FBSN umgesetzt. In diesem Kennfeld 440 wird die Form des Nockens, der den Hockdruckteil 120 antreibt, nachgbildet.

Die Winkelgröße FBSN gibt den Sollwert für den Förderbeginn, bezogen auf die Antriebswelle, vor. Die ASS-Erfassung 460 bestimmt ausgehend von dem Impulssignal ASS eine Winkelgröße FBIN, die den Istwert des Förderbeginns, bezogen auf die Antriebswelle, angibt. Ausgehend von dem Vergleich dieser beiden Signale erzeugt der Förderratenregler 445 ein Signal PS zur Beaufschlagung der Förderratenverstelleransteuerung 275. Dieses Signal gibt die gewünschte Phasenverschiebung PS zwischen der Kurbelwelle und der Antriebswelle an.

Erkennt eine der Umschalteinrichtungen 470 oder 475, daß ein unzulässiger Betriebszustand vorliegt, so steuern die Umschalteinrichtungen 470 und 475 die Schalter 415, 435 und 450 so an, daß sie in ihre zweite Position übergehen. Wenn immer ohne ASS-Signal gearbeitet werden soll, können die die Schalter 435 und 450 sowie die Umschalteinrichtung 475 entfallen.

Bei Betätigung des Schalters 415 wird von einer Spritzbeginnregelung auf eine Förderbeginnregelung übergegangen. Dies erfolgt vorzugsweise dann, wenn der Sensor 210 fehlerhaft arbeitet, bzw. wenn kein solcher Senor vorgesehen ist. In der Istwertermittlung 400 wird die Phasenverschiebung P ermittelt. Hierzu werden die Signale der Sensoren 315 und 215 ausgewertet. Aus dem Abstand zwischen dem Signal OT, das den oberen Totpunkt angibt und dem Synchronisationsimpuls S ergibt sich direkt die Phasenverschiebung P.

In Verbindung mit dem Sollwert FBSN, der über das Verbindungsmittel 142 von der Pumpensteuereinheit 140 bereitgestellt wird, steht am Additionspunkt 401 der Istwert FBIK für den Förderbeginn bezogen auf die Kurbelwelle zur Verfügung. Dieser Istwert wird im Additionspunkt 405 mit dem Sollwert FBSK für den Förderbeginn verglichen. Ausgehend von diesem Vergleich bestimmt der Fördrbeginnregler 410 ein Signal FBK, das den Förderbeginn bezogen auf die Kurbelwelle angibt. Dieses Signal FBK wird dann über das Verbindungsmittel 142 zur Pumpensteuereinheit 140 übertragen.

Da die Magnetventilansteuerung 260 die Ansteuersignale auf die Antriebswelle bezogen erzeugt, muß das von der Motorsteuerung bereitgestellte Signal FBIK für den Förderbeginn in ein Antriebswellen bezogenes Signal FBIN umgerechnet werden. Hierzu wird im Additionspunkt 430 von dem Signal FBIK die Phasenverschiebung P abgezogen. Die Phasenverschiebung wird von dem Förderratenverstellermodell 280 bereitgestellt. Dieses Förderratenverstellermodell bildet gemäß einem Modell die tatsächliche Phasenverschiebung ausgehend von dem Sollwert PS für die Phasenverschiebung nach. Bei diesem Modell handelt es sich in erster Näherung um ein Verzögerungsglied, das das Verhalten des Förderratenverstellers nachbildet. Der Sollwert PS für die Phasenverschiebung ergibt sich aus der Differenz zwischen dem Ausgangssignal des Kennfeldes 440 und dem Signal FBK, das von der Motorsteuerung bereitgestellt wird. Diese Differenz steht am Ausgang des Additionspunktes 465 bereit.

Mit diesem Sollwert PS für die Phasenverschiebung wird auch die Förderratenansteuerung 275 beaufschlagt. Ferner wird das Ausgangssignal FBSN als Sollwert für den auf die ANtriebswelle bezogenen Förderbeginn über das Verbindungsmittel 142 der Motorsteuereinheit bereitgestellt.

Die hier beschriebene Aufteilung der einzelnen Funktionen auf die beiden Steuereinheiten ist vorteilhaft. Sie kann aber beliebig abgewandelt werden, so können einzelne Funktionen auch auf eine andere Steuereinheit übertragen werden. Es ist auch vorstellbar, daß die beiden Steuereinheiten in eine Einheit integriert werden. In diesem Fall entspricht die Funktionsweise der Ausführungsform der Figur 5 im Notfahrbetrieb der Funktionsweise der Ausführungsform der Figur 4.

## Patentansprüche

1. System zur Steuerung einer Kraftstoffzumeßeinrichtung insbesondere für eine Dieselbrennkraftmaschine mit ersten Mitteln zur Erzeugung eines ersten Signals zur Ansteuerung eines ersten Stellmittels (115) zur Festlegung des Förderbeginns und des Förderendes, mit zweiten Mitteln zum Erzeugen eines zweiten Signals zur Ansteuerung eines zweiten Stellmittels (125) zur Festlegung der Förderrate, wobei die zweiten Mittel ein Signal, das den Förderbeginn charakterisiert, berücksichtigt.

2. System nach Anspruch 1, dadurch gekennzeichnet, daß ein erster Beobachter ausgehend von dem ersten Signal ein Korrektursignal zur Korrektur des zweiten Signals bestimmt.

3. System nach einem der vorhergehenden Ansprüche, dadurch gekennzeichnet, daß es sich bei dem ersten Stellmittel um ein Magnetventil handelt.

4. System nach einem der vorhergehenden Ansprüche, dadurch gekennzeichnet, daß die ersten Mittel eine Spritzbeginnregelung oder eine Förderbeginnregelung umfassen, die abhängig von dem Vergleich zwischen einem Sollwert und einem Istwert das erste Signal vorgeben.

5. System nach einem der vorhergehenden Ansprüche, dadurch gekennzeichnet, daß das erste Signal abhängig von dem zweiten Signal korrigierbar ist.

6. System nach einem der vorhergehenden Ansprüche, dadurch gekennzeichnet, daß die zweiten Mittel ein die Förderrate charakterisierendes Signal (P), berücksichtigen.

7. System nach einem der vorhergehenden Ansprüche, dadurch gekennzeichnet, daß ein zweiter Beobachter ausgehend von dem zweiten Signal ein Korrektursignal zur Korrektur des ersten Signals bestimmt.

8. System nach einem der vorhergehenden Ansprüche, dadurch gekennzeichnet, daß die zweiten Mittel eine Förderratenregelung umfassen, die abhängig von dem Vergleich zwischen einem Sollwert und einem Istwert das zweite Signal vorgeben.

9. System nach einem der vorhergehenden Ansprüche, dadurch gekennzeichnet, daß das zweite Signal abhängig von dem ersten Signal korrigierbar ist.

## Claims

1. System for controlling a fuel-metering device, especially for a diesel-powered internal-combustion engine, having first means for generating a first signal for the command of a first actuating means (115) serving to define the commencement and termination of the feed, having second means for generating a second signal for the command of a second actuating means (125) serving to define the feed rate, the second means taking account of a signal which characterizes the commencement of the feed.

2. System according to Claim 1, characterized in that a first observer, on the basis of the first signal, determines a correction signal for the correction of the second signal.

3. System according to one of the preceding claims, characterized in that the first actuating means is constituted by a solenoid valve.

4. System according to one of the preceding claims, characterized in that the first means comprise an injection-commencement governing mechanism or a feed-commencement governing mechanism, which, depending upon the comparison between a desired value and an actual value, predefine the first signal.

5. System according to one of the preceding claims, characterized in that the first signal can be corrected as a function of the second signal.

6. System according to one of the preceding claims, characterized in that the second means take account of a signal (P) characterizing the feed rate.

7. System according to one of the preceding claims, characterized in that a second observer, on the basis of the second signal, determines a correction signal for the correction of the first signal.

8. System according to one of the preceding claims, characterized in that the second means comprise a feed-rate governing mechanism predefines the second signal as a function of the comparison between a desired value and an actual value.

9. System according to one of the preceding claims, characterized in that the second signal can be corrected as a function of the first signal.

## Revendications

1. Système de commande d'un dispositif de dosage de carburant, en particulier pour un moteur à combustion interne de type Diesel, avec un premier moyen pour produire un premier signal qui sert à commander un premier moyen de réglage (115) destiné à déterminer le début du transfert de carburant et la fin du transfert de carburant, avec un second moyen pour produire un second signal qui sert à commander un second moyen de réglage (125) destiné à déterminer le taux de transfert de carburant, le second moyen prenant en considération un signal qui caractérise le début du transfert de carburant.

2. Système selon la revendication 1, caractérisé en ce qu'un premier observateur détermine, en partant du premier signal, un signal de correction qui sert à corriger le second signal.

3. Système selon l'une des revendications précédentes, caractérisé en ce qu'il s'agit, dans le cas du premier moyen de réglage, d'une électrovanne.

4. Système selon l'une des revendications précédentes, caractérisé en ce que les premiers moyens comprennent une régulation de début d'injection ou une régulation de début de transfert de carburant qui prédéfinissent le premier signal en fonction de la comparaison entre une valeur de consigne et une valeur réelle.

5. Système selon l'une des revendications précédentes, caractérisé en ce que le premier signal peut être corrigé en fonction du second signal.

6. Système selon l'une des revendications précédentes, caractérisé en ce que les seconds moyens prennent en considération un signal (P) qui est caractéristique du taux de transfert de carburant.

7. Système selon l'une des revendications précédentes, caractérisé en ce qu'un second observateur détermine, en partant du second signal, un signal de correction servant à corriger le premier signal.

8. Système selon l'une des revendications précédentes, caractérisé en ce que les seconds moyens comprennent une régulation de taux de transfert de carburant qui prédéfinit le second signal en fonction de la comparaison entre une valeur de consigne et une valeur réelle.

9. Système selon l'une des revendications précédentes, caractérisé en ce que le second signal peut être corrigé en fonction du premier signal.
